(19) Europäisches Patentamt
European Patent Office
Office européen des brevets

(11) **EP 0 650 267 B1**

(12) **FASCICULE DE BREVET EUROPEEN**

(45) Date de publication et mention
de la délivrance du brevet:
**23.10.2002 Bulletin 2002/43**

(51) Int Cl.⁷: **H04B 3/54**, G06F 15/02

(21) Numéro de dépôt: **94810447.6**

(22) Date de dépôt: **28.07.1994**

(54) **Système de transmission**

Übertragungssystem

Transmission system

(84) Etats contractants désignés:
**AT BE CH DE DK ES FR GB GR IE IT LI LU MC NL PT SE**

(30) Priorité: **22.10.1993 CH 318093**

(43) Date de publication de la demande:
**26.04.1995 Bulletin 1995/17**

(73) Titulaire: **VALTAC, Alex Beaud
1228 Plan-les-Ouates (CH)**

(72) Inventeur: **Berney, Jean-Claude
CH-1343 Les Charbonnières (CH)**

(74) Mandataire: **Frei, Alexandra Sarah
Frei Patentanwaltsbüro
Postfach 768
8029 Zürich (CH)**

(56) Documents cités:
**EP-A- 0 134 174**

## Description

La présente invention concerne une méthode et un système de transmission de données en série entre un circuit intégré mémoire et une alimentation externe.

Il existe à l'heure actuelle des circuits intégrés ROM, EPROPM ou EEPROM pouvant être lus, voire lus et écrits, par une alimentation au moyen d'un dispositif externe de lecture/écriture adéquat. Dans ces cas la transmission des informations se fait sous forme sérielle par superposition de signaux sur la tension d'alimentation. La transmission vers l'intérieur du circuit intégré se fait par des signaux en tension modulés en amplitude superposés à la tension d'alimentation, ces signaux étant générés par le dispositif de lecture/écriture, alors que la transmission vers l'extérieur du circuit intégré se fait par des signaux en courant générés par le circuit intégré et superposés au courant de base consommé par celui-ci.

Cette méthode de faire est simple, mais peut se révéler relativement peu sûre en raison des mauvais contacts et parasites de toutes sortes qui peuvent déformer les signaux et fausser leur interprétation.

Une méthode similaire est révélée dans le document EP-A-0 134 174 où un procédé de transmission de messages entre un poste centrale et plusieurs postes éloignés est décrit. Le poste centrale adresse les postes éloignés par modulation de la tension d'alimentation, les postes éloignés peuvent répondre par modulation d'amplitude du courant consommé. Pour ce procédé il est inévitable, que c'est le poste centrale fournissant l'alimentation qui synchronise la transmission. Appliqué à un système comprenant un circuit intégré mémoire et des moyens de lecture/écriture fournissant le courant d'alimentation, ce système correspond à la méthode relativement peu sûre discutée précédemment.

La présente invention a pour but de fournir une méthode et un système de transmission et de gestion de données sur la tension d'alimentation présentant une très grande sécurité de fonctionnement.

Conformément à l'invention, ce but est atteint par le fait que la transmission de données en série entre un circuit intégré mémoire et une alimentation externe fournissant un courant d'alimentation au circuit intégré se fait de manière suivante: Pour former un signal de sortie du circuit intégré, le courant d'alimentation est modulé en fonction de données générées par le circuit intégré mémoire. Pour former un signal d'entrée au circuit intégré, des signaux générés en fonction de données à transmettre au circuit intégré mémoire sont superposés au courant d'alimentation. En plus le signal d'entrée et le signal de sortie sont synchronisés. Plus particulièrement les signaux en courant délivrés par le circuit intégré sont des signaux de fréquence fixe modulés en largeur, un dispositif de lecture/écriture étant agencé de manière à générer des signaux en tension synchrones avec lesdits signaux en courant générés par le circuit intégré, la phase entre lesdits signaux en courant et lesdits signaux en tension étant représentative des états logiques des informations à transmettre au circuit intégré.

Cette méthode et ce système permettent de limiter le nombre de connexions du circuit intégré au maximum, ce qui est particulièrement utile dans certaines applications où la miniaturisation est importante, comme dans les montres à quartz par exemple.

L'invention est décrite ci-après à l'aide d'un exemple et de références aux figures jointes, dans lesquelles:

La figure 1 représente schématiquement un circuit de formation des signaux en courant selon l'invention.

La figure 2 représente schématiquement la forme des signaux générés par le circuit selon la fig. 1.

La figure 3 représente schématiquement un amplificateur de signaux de tension sur l'alimentation du circuit.

La figure 4 représente schématiquement le système de décodage des signaux de tension synchrones selon l'invention.

La figure 5 représente le dispositif de synchronisation entre les signaux d'entrée et de sortie.

La figure 6 représente schématiquement l'ensemble du système avec son appareil de lecture/écriture.

La figure 7 représente schématiquement un système de liaison avec contact.

La figure 8 représente schématiquement un système de liaison par couplage magnétique.

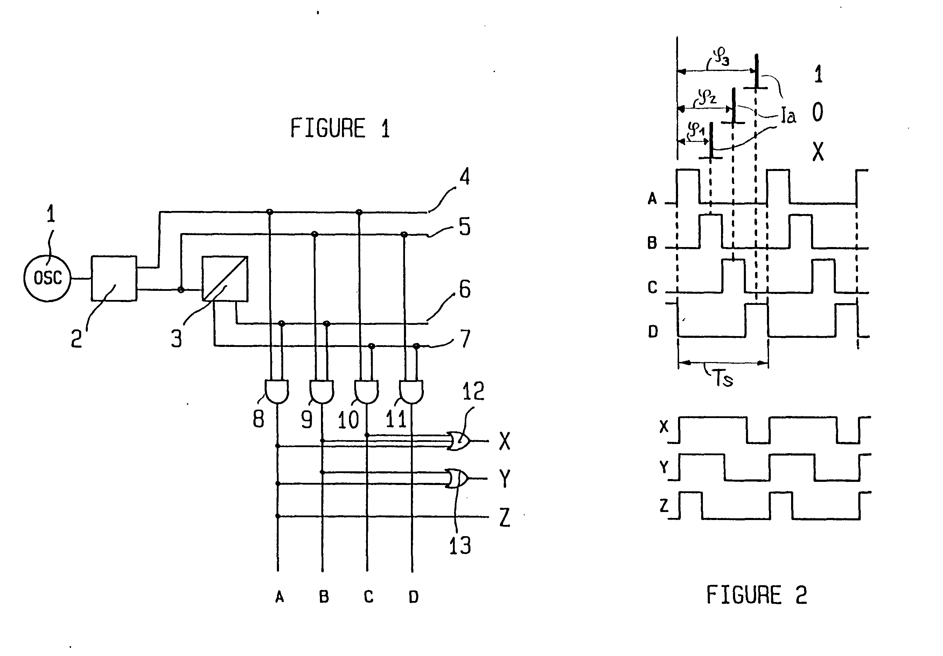

La figure 1 représente essentiellement les éléments internes du circuit intégré permettant de générer les signaux de base nécessaires à la transmission des informations. Une horloge interne 1 délivre une fréquence de base précise à une chaîne de division formée de deux flip-flops 2, 3 qui divisent cette fréquence de base par 4. Les sorties de ces flip-flops 4, 5, 6, 7 sont reliées aux entrées de 4 portes AND 8, 9, 10, 11 qui délivrent à leurs sorties respectives les signaux A, B, C et D. Les sorties des portes 8, 9, 10, 11 sont reliées aux entrées des portes OR 12, 13 qui permettent de générer les signaux X, Y et Z.

Sur la figure 2, on peut voir que les signaux A, B, C et D sont de fréquence identique, mais décalés chacun de un quart de période. A partir de ces signaux, on obtient les trois signaux X, Y et Z de fréquence égale dont les flancs de montée sont superposés, mais dont la largeur est différente. A chaque largeur peut correspondre un état logique distinct, soit par exemple X pour le signal X, 0 pour le signal Y et 1 pour le signal Z. L'état logique X correspond à un état spécial qui peut être utilisé par exemple comme séparateur entre deux groupes de 1 et de 0. En modulant le courant consommé par le circuit intégré en fonction de ces signaux X, Y et Z, par exemple en commutant une charge sur l'alimentation au moyen d'un transistor, on arrive à transmettre en série vers l'extérieur du circuit intégré les informations contenues dans la mémoire EEPROM. Pour lire ces informations, il suffira au système de lecture de mesurer les variations du courant d'alimentation du circuit intégré et d'interpréter ces signaux de courant en fonction de leur largeur pour restituer l'information transmise par le circuit intégré. Il va sans dire que celui-ci doit être muni des moyens nécessaires pour lire la mémoire et transformer les informations contenues dans celle-ci en informations série. Ces moyens dépendent de la configuration de la mémoire et de ses accès. De tels moyens sont bien connus par les gens de métier et ne seront donc pas décrits ici.

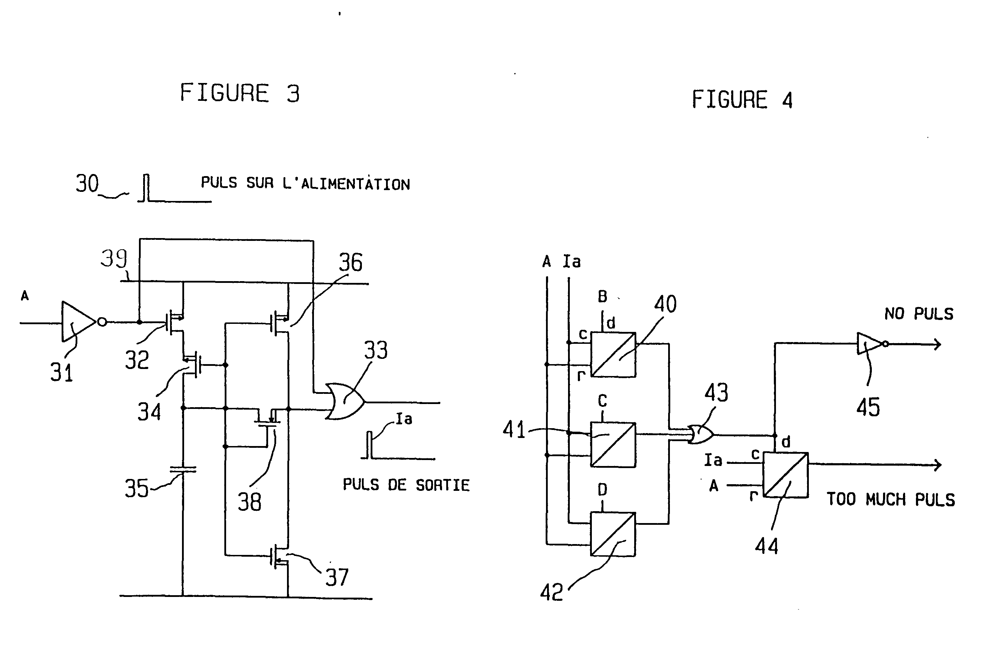

Dans la figure 2 on trouve également des impulsions la qui sont générées par les signaux en tension superposés sur l'alimentation. On voit que, suivant la phase φ1, φ2, φ3 de ces signaux avec les signaux en courant générés par le circuit intégré, les impulsions la vont tomber en phase avec les signaux B, C ou D, chacune de ces phases pouvant correspondre à un état logique, par exemple X, 0 et 1, de l'information à transmettre au circuit intégré. La fonctionnalité de ces impulsions la sera expliquée à la figure 4.

La figure 3 représente à titre d'exemple un amplificateur de type CMOS qui permet de générer les impulsions la à partir des impulsions en tension 30 superposées sur la tension d'alimentation du circuit intégré. Le signal A généré par le circuit de la figure 1 est appliqué à l'entrée d'un inverseur 31 dont la sortie va sur le gate d'un transistor 32 et sur une entrée d'une porte OU 33. Le collecteur du transistor 32 est relié à l'émetteur du transistor 34 dont le gate et le collecteur vont sur un condensateur 35. Ce condensateur est relié à l'entrée d'un amplificateur inverseur formé des transistors 36, 37 dont les gates et les collecteurs sont en commun, les premiers formant l'entrée de l'amplificateur et les seconds la sortie, cette dernière étant reliée à la seconde entrée de la porte 33. Enfin le gate, le collecteur et l'émetteur d'un transistor 38 sont reliés à l'entrée, respectivement à la sortie de l'amplificateur.

Lorsque le signal A est positif, la sortie de l'inverseur 31 est à 0. De ce fait la sortie de la porte OU 33 est bloquée à 0 et l'amplificateur ne peut pas délivrer d'impulsions la à sa sortie. Le signal A est en fait utilisé pour initialiser le système de détection des impulsions 30 sur l'alimentation, et l'amlificateur ne délivrera pas d'impulsions à sa sortie que si une impulsion 30 arrive pendant les signaux B, C, ou D. Pendant le signal A, les transistors 32 et 34 permettent de charger la capacité 35, alors que le transistor 38 permet de la décharger à travers le transistor 37. La tension aux bornes de la capacité 35 se stabilise au moment où les courants de charge et de décharge s'équilibrent. A ce point d'équilibre, les transistors 36 et 37 sont conducteurs et l'amplificateur est polarisé en classe B, le transistor 37 étant plus conducteur que le transistor 36 puisqu'il délivre non seulement le courant qui passe par le transistor 36, mais également celui qui passe par les transistors 32 et 34.

Lorsque le signal A devient égal à 0, les transistors 32 et 34 ne sont plus conducteurs, et la condensateur 35 maintient la polarisation de l'amplificateur 36, 37 en classe B. La sortie de celui-ci est basse et la sortie de la porte 33 est à 0. Lorsqu'apparaît dans la conduite d'alimentation 39 une impulsion 30 superposée sur la tension d'alimentation, le transistor 36 devient plus conducteur que le transistor 37. Si cette impulsion sur l'alimentation est d'amplitude suffisante, la sortie de l'amplificateur passe à 1 de même que la sortie de la porte 33. On génère donc bien des impulsions de sortie la en relation avec les signaux de tension superposés sur l'alimentation.

La figure 4 représente à titre d'exemple un circuit de décodage de ces impulsions la correspondant aux impulsions 30 superposées sur l'alimentation. Ce circuit permet d'une part de détecter immédiatement l'absence ou le surnombre d'impulsions, et d'autre part d'attribuer une signification logique X, Y ou 1 à chaque impulsion la selon qu'elle arrive simultanément avec les signaux B, C et D. En effet, lorsqu'on a affaire à des circuits de type EPROM ou EEPROM, il faut également pouvoir transmettre des informations au circuit intégré pour pouvoir modifier si nécessaire le contenu de la mémoire. Cette opération est particulièrement délicate dans la mesure où, si une simple lecture ne peut pas détériorer le contenu de la mémoire, une écriture défectueuse peut provoquer des effets irréversibles. Le circuit intégré doit donc être muni de moyens qui lui permettent de séparer facilement les informations correctes en provenance de l'extérieur des informations fausses dues à des mauvais contacts ou des parasites. Le système de lecture/écriture est donc agencé de manière à générer des signaux de tension superposés à l'alimentation, ces signaux étant détectés par un amplificateur qui délivre les impulsions correspondantes la comme expliqué plus haut (fig 3). Ces signaux sont synchronisés avec les signaux de courant délivrés par le circuit intégré (fig 2), de manière à tomber en phase avec avec l'une des sorties B, C ou D des portes 9, 10 et 11 de la figure 1, chacune de ces phases correspondant à un état logique X, 0 ou 1 de l'information qui doit être transmise par le système de lecture à l'intérieur du circuit intégré.

La figure 4 représente schématiquement un circuit permettant de décoder ces trois états X, 0 et 1, et de détecter immédiatement toute erreur de transmission. Pour séparer ces trois états, les impulsions la sont appliquées aux entrèes dock de trois flip-flops D 40, 41, 42 dont les entrées reset sont reliées à la sortie de la porte 8 de la figure 1 qui délivre le signal A. Les entrées D des 3 flip-flops 40, 41, 42 sont reliées aux sorties des portes 9, 10 et 11 de la figure 1 qui délivrent les signaux B, C et D. Les sorties des 3 flip-flops 40, 41, 42 sont reliées aux entrées d'une porte OR 43 dont la sortie va sur l'entrée D d'un flipflop D 44.

Si l'on considère comme référence la période du signal de courant généré par le circuit intégré, on peut relever que celle-ci est divisée en quatre quarts correspondant aux signaux A, B, C et D. Dans le premier quart de période A, les flip-flops 40, 41, 42 et 44 sont remis à 0. Ensuite, si l'impulsion Ia tombe dans le deuxième quart de période, c'est le flip-flop 40 qui passe à 1, respectivement le flipflop 41 pour le troisième quart de période et le flip-flop 42 pour le quatrième quart de période, ce qui correspond aux états X, 0 et 1 de l'information à transmettre.

En fonctionnement correct, le système de lecture/écriture doit générer une impulsion par période. Il y a donc au moins un des flip-flops 40, 41 ou 42 qui passe à 1 et la sortie de la porte 43 passe à 1. Cette sortie est reliée à l'entrée d'un inverseur 45 dont la sortie passe à 0.

Si, en raison d'un disfonctionnement, par exemple un mauvais contact, il n'y a pas eu d'impulsion Ia pendant la période considérée, tous les flip-flops restent à 0 et la sortie de l'amplificateur 45 restera à 1, ce qui correspond à un état "NO PULS".

Si par contre, il y a des parasites et qu'il y a eu plus d'une impulsion Ia pendant la période considérée, il se passe la chose suivante. La première impulsion fait basculer un flipflop à 1 de même que la sortie de la porte 43. Cette sortie va sur l'entrée D du flip-flop 44 qui passe à 1. A la deuxième impulsion Ia, ce flip-flop 44 va donc passer à 1 également, ce qui correspond à un état "TOO MUCH PULS".

Ainsi chaque erreur de fonctionnement est immédiatement détectée à l'intérieur du circuit intégré, ce qui permet d'interrompre immédiatement la procédure d'écriture, par exemple. Cette combinaison permet donc une sécurité presque absolue dans la transmission des informations.

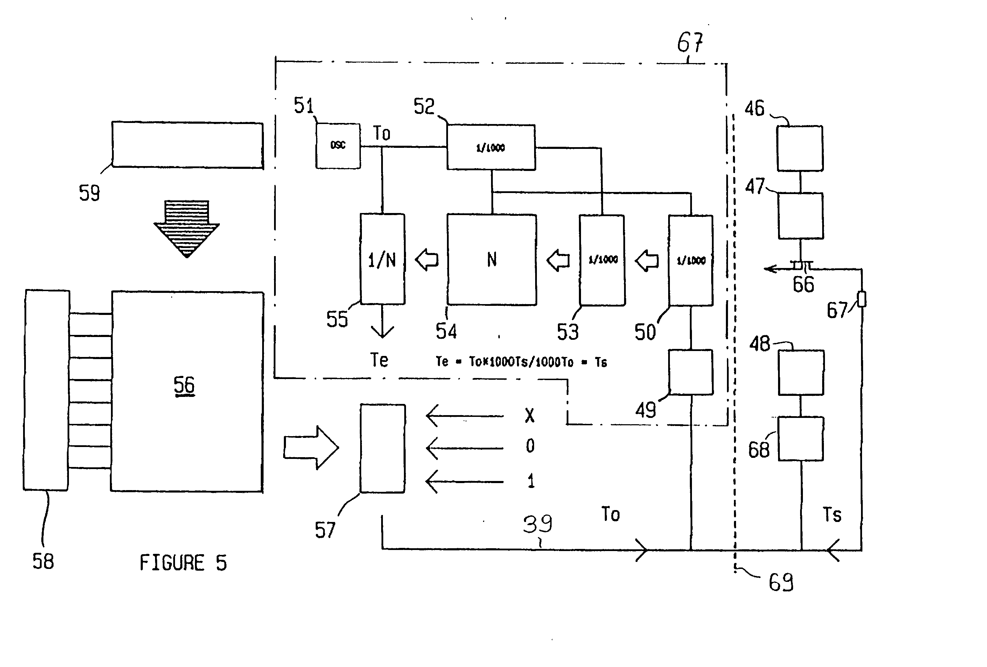

La figure 5 représente schématiquement la configuration du système de lecture/écriture et plus particulièrement le circuit de synchronisation entre les signaux de courant à la sortie du circuit intégré et les signaux en tension à l'entrée de celui-ci. Les éléments à droite du traitillié 69 sont des éléments internes déjà décrits aux figures précédentes et faisant partie du circuit intégré, alors que les éléments à gauche concernent particulièrement des éléments du système de lecture/écriture. Sur cette figure 5 on reconnaît le circuit intégré mémoire 46 avec son oscillateur et son diviseur par 4 qui génère par l'intermédiaire d'un circuit de mise en forme 47 les signaux X, Y, Z de période Ts. Ces signaux sont transmis vers l'extérieur par l'intermédiaire d'un transistor 66 qui commute une charge 67 branchée sur la ligne d'alimentation 39. La commutation de cette charge crée sur cette ligne d'alimentation les signaux en courant permettant de transmettre à l'extérieur les informations X, Y ou Z. On trouve également l'amplificateur 68 représenté à la figure 3 délivrant des impulsions Ia au décodeur 48 représenté à la figure 4.

Dans le système de lecture/écriture, ces signaux en courant X, Y, Z de période fixe Ts arrivant du circuit intégré dans la conduite 39 sont amplifiés et filtrés par un amplificateur d'entrée 49 puis transmis à l'entrée d'un diviseur par 1000 50 qui délivre donc sur sa sortie un signal de période 1000*Ts.

Le système de lecture/écriture comporte également un oscillateur interne 51 de période To branché à l'entrée d'un second diviseur par 1000 52 dont la période de sortie est 1000*To. La sortie de ce diviseur 52 est reliée à l'entrée d'un troisième diviseur par 1000 53. Les sorties logiques de ce diviseur 53 sont reliées aux entrées data d'une mémoire tampon 54 reliée aux entrées de sélection d'un diviseur de taux programmable 55 recevant sur son entrée les signaux de période To délivrés par l'oscillateur, et délivrant sur sa sortie des signaux de période Te.

Lorsque le diviseur 50 a fait un cycle complet, l'état du diviseur 53 est enregistré dans la mémoire 54, puis les diviseurs 52 et 53 sont remis à 0. Si N est l'état du diviseur 50 à ce moment là, on a la relation:

$$N * 1000\,To = 1000\,Ts$$

d'où

$$N = Ts/To$$

La période de sortie du diviseur programmable 55 dont le taux de division a été fixé à N par la mémoire 54 est de:

$$Te = N * To = Ts$$

On a donc bien égalité entre le signal Te délivré par le système de lecture/écriture et le signal Ts délivré par le circuit intégré, le circuit 67 décrit ci-dessus fonctionnant comme circuit de synchronisation entre ces signaux.

En fait cette configuration est décrite plus pour la compréhension du système que comme cas pratique. Il existe en effet dans le commerce des circuits intégrés synthétiseurs de fréquence (PLL) utilisés très généralement en radio qui réalisent cette fonction de synchronisation de manière beaucoup plus performante que le circuit décrit à la figure 5.

Ce circuit de la figure 5 comporte également un microprocesseur 56 qui gère les différentes fonctions de gestion et de transmission des données en provenance ou vers le circuit intégré. Ce microprocesseur est relié par un bus notamment à un circuit de mise en forme 57 des signaux en tension qui sont superposés à la tension d'alimentation du circuit intégré en fonction des états logiques X, 0 ou 1 des informations à transmettre. Ce microprocesseur est programmé soit par une ROM interne dédicacée (ROM masquée), soit par une EPROM externe au microprocesseur 58 mais fixe dans le système de lecture/écriture. Ce système peut également comprendre une mémoire amovible 59 qui contient des sousprogrammes dédicacés à un utilisateur particulier, concernant par exemple des codes d'accès ou un cryptage particulier du contenu de la mémoire du circuit intégré.

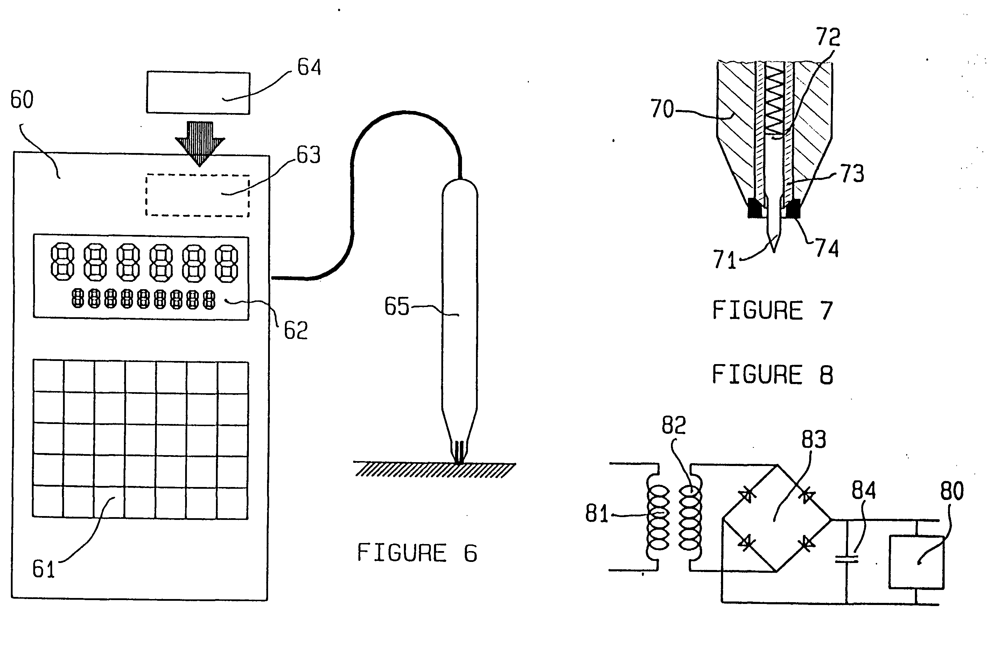

La figure 6 représente schématiquement à titre d'exemple l'ensemble du système avec son appareil de lecture/écriture. Cet appareil 60 qui renferme le système de lecture écriture décrit à la figure 5, peut comprendre également un clavier 61 permettant de sélectionner des fonctions ou d'introduire des variables, et un affichage 62 permettant de lire les informations et, d'une manière générale, de communiquer avec le système. L'appareil peut également comprendre un emplacement 63 où l'on peut connecter une mémoire amovible 64 contenant des éléments de programme propres à une utilisation ou à un utilisateur particulier. L'appareil de lecture/écriture comporte également des moyens pour se brancher directement ou indirectement sur le circuit intégré mémoire concerné. Ces moyens de branchement peuvent par exemple se présenter sous forme d'un stylo contacteur 65 se présentant comme certains stylos/contrôleurs de tension du commerce.

La figure 7 représente un détail de ce stylo comportant un corps métallique 70 et une pointe de contact 71 montée sur un ressort 72. La pointe de contact 71 coulisse dans un tube isolant 73 monté dans le corps du stylo 70, lequel est relié à la masse. Le corps du stylo 70 est donc relié au pôle neutre de l'alimentation et la pointe de contact 71 au pôle actif de celle-ci, pôle sur lequel sont superposés les signaux de tension générés par le système de lecture/écriture. Pour les applications courantes, le contact de masse peut se faire avec une pincette métallique reliée au stylo par un fil souple, comme cela se fait dans les stylos/contrôleurs sus-mentionnés. Si la connexion avec le circuit intégré mémoire se fait par des contacts de type coaxial, le contact central sera établi par la pointe 71, et le contact extérieur par un anneau de caoutchouc conducteur 74 fixé sur l'extrémité du corps métallique du stylo. Ce caoutchouc conducteur a une certaine élasticité qui facilite le maintien du contact.

Enfin la figure 8 représente schématiquement à titre d'exemple un système de liaison par couplage magnétique. En fait l'alimentation du circuit intégré mémoire 80 peut se faire au moyen d'un signal porteur de haute fréquence par l'intermédiaire d'une bobine émettrice 81 et d'une bobine réceptrice 82. Le signal à la sortie de la bobine réceptrice est redressé par un pont de diodes et filtré par une capacité 84. Si la fréquence du signal porteur est beaucoup plus élevée que la fréquence des signaux en courant et en tension nécessaires pour assurer la transmission des données, ce signal est entièrement filtré par la capacité 84 et le circuit intégré ne perçoit que l'enveloppe redressée de ce signal porteur, soit une tension continue sur laquelle viennent se superposer les signaux en tension synchrones générés par le système de lecture/écriture. De même les variations de charge provoqués par les signaux en courant générés par le circuit intégré mémoire pourront être détectés sans problèmes aux bornes de la bobine émettrice, pour autant que le couplage entre les bobines émettrices et captrices soit correct. Cette manière de faire permet donc de réaliser une liaison sans contact entre le circuit intégré mémoire et le système de lecture/écriture.

Les variantes possibles de réalisation du système selon l'invention sont multiples, mais leurs description n'apporteraient pas d'éléments nouveaux qui permettraient de faciliter la compréhension du système. Par exemple les circuits 46, 47, 48 et peuvent être intégrés dans le même circuit intégré ou peuvent constituer des circuits distincts et faisant partie d'un autre élément ou circuit intégré relié au circuit intégré mémoire.

## Revendications

1. Méthode de transmission de données en série entre un circuit intégré mémoire et des moyens de lécture/écriture externes fournissant un courant d'alimentation au circuit intégré, des données étant transmis des moyens de lécture/écriture au circuit intégré par superposant des impulsions de tension (30) à la tension d'alimentation, des données étant transmis du circuit intégré aux moyens de lécture/écriture par modulation du courant consommé par le circuit intégré **caractérisée en ce que** les moyens de lécture/écriture sont séparables du circuit intégré et que, pour rendre possible la transmission des données, un élément mobile (65) est branché au circuit intégré, que le circuit intégré comprend une horloge interne (1) synchronisant la génération des signaux de sortie (X, Y, Z) correspondant à des données à transmettre par modulation du courant d'alimentation, que les moyens de lécture/écriture sont synchronisés avec le courant d'alimentation par un circuit de synchronisation (68), que les moyens de lecture/écriture forment des signaux d'entrée (Ia) correspondant aux données à être transmis, et que lesdits signaux d'entrée (Ia) sont synchronisés avec les modulations du courant.

2. Méthode selon la revendication 1, **caractérisée par le fait que** le signal de sortie (X, Y, Z) est un signal en courant à fréquence fixe modulé en largeur, la largeur des signaux correspondant à un état logique distinct (1, 0, X) et aux données transmises par le circuit intégré et en ce que la phase ($\varphi$) entre les signaux synchronisés correspond à un état logique distinct (1, 0, X) et constitue les données transmises vers le circuit intégré.

3. Méthode selon la revendication 1, **caractérisée par le fait que** l'alimentation du circuit intégré, ainsi que la transmission de données entre celui-ci et un système de lecture/écriture externe, se fait par l'intermédiaire d'une fréquence porteuse de fréquence beaucoup plus élevée que celle des données à transmettre, cette fréquence porteuse étant transmise par l'intermédiaire d'une bobine émettrice à une bobine captrice, le signal à la sortie de cette bobine captrice étant préalablement redressé et filtré avant d'être appliqué aux bornes d'alimentation du circuit intégré.

4. Système de transmission et de gestion de données pour un circuit intégré mémoire, comportant des moyens lecture/écriture avec un circuit de lecture/écriture externe **caractérisé par le fait que** le circuit intégré est séparable des moyens de lecture/écriture, qu'un élément mobile (65) relié au circuit de lecture/écriture est pourvue pour se brancher sur le circuit intégré mémoire, que le circuit intégré comporte une horloge interne (1) destinée à dicter une fréquence fixe pour la transmission des données, et que le circuit de lecture/écriture comporte un circuit de synchronisation (68) destiné à synchroniser les signaux de sortie du circuit intégré aux signaux d'entrée du circuit intégré.

5. Système selon la revendication 4, **caractérisé par** un microprocesseur (58) et un circuit de contrôle (40, 41, 42, 43, 44) agencé de manière à détecter les défauts de synchronisme entre les signaux générés par le circuit intégré et les signaux générés par le microprocesseur.

6. Système selon la revendication 4, **caractérisé par** une mémoire interchangeable (59, 63, 64) pouvant être fixée sur le circuit de lecture/écriture.

7. Système selon la revendication 4, **caractérisé par** un élément mobile (65) ayant deux éléments de contact (71, 74) dont une pointe de contact centrale montée sur ressort.

8. Système selon la revendication 4, **caractérisé par** un élément mobile (65) à liaison par couplage inductif sans contact direct.

9. Système selon la revendication 4, **caractérisé par le fait que** les moyens de lecture/écriture comportent au moins des éléments de mémoire fixe (ROM, EPROM) qui comportent les données de base de transcription du contenu du circuit intégré mémoire, un clavier (61) pour introduire les données variables, et un affichage (62) pour communiquer les informations utiles à l'utilisateur.

10. Système selon la revendication 4, **caractérisé par le fait qu'**au moins une partie des données de base pour la transcription du contenu du circuit intégré mémoire est contenue dans une mémoire interchangeable (63, 64) pouvant être fixée sur les moyens de lecture/écriture.

**Patentansprüche**

1. Verfahren zur Übertragung von Daten in Serie zwischen einem integrierten Speicherschaltkreis und externen Lese-/Schreibmitteln, wobei ein Versorgungsstrom den integrierten Schaltkreis speist, von Daten, die von den Lese-/Schreibmitteln zu dem integrierten Schaltkreis durch Überlagerung von Spannungsimpulsen (30) gegenüber der Versorgungsspannung übertragen werden, von Daten, die vom integrierten Schaltkreis zu den Lese-/Schreibmitteln durch Modulation des Verbrauchstroms durch den integrierten Schaltkreis übertragen werden,

   **dadurch gekennzeichnet,**

   **dass** die Lese-/Schreibmittel trennbar vom integrierten Schaltkreis sind und dass, um die Übertragung der Daten möglich zu machen, ein mobiles Element (65) mit dem integrierten Schaltkreis verbunden ist, dass der integrierte Schaltkreis einen Taktgeber (1) aufweist, der die Generierung der Ausgangssignale (X, Y, Z), entsprechend den Daten synchronisiert, die durch Modulation des Versorgungsstroms zu übertragen sind, dass die Lese-/Schreibmittel mit dem Versorgungstrom durch eine Synchronisationsschaltung (68) synchronisiert werden, dass die Lese-/Schreibmittel Eingangssignale (Ia) entsprechend der Daten, die übertragen werden müssen, ausbilden und dass die genannten Eingangssignale (Ia) mit den Modulationen des Stroms synchronisiert werden.

2. Verfahren nach Anspruch 1, **dadurch gekennzeichnet, dass** das Ausgangssignal (X, Y, Z) ein Stromsignal mit einer bestimmten Frequenz ist, die in der Breite moduliert ist, wobei die Breite der Signale einem unterschiedlichen Zustand (1, 0, X) und den durch den integrierten Schaltkreis übertragenen Daten entspricht und wobei die Phase (4) zwischen den synchronisierten Signalen einem unterschiedlichen logischen Zustand (1, 0, X) entspricht und die zum integrierten Schaltkreis übertragenen Daten bildet.

3. Verfahren nach Anspruch 1, **dadurch gekennzeichnet, dass** die Versorgung des integrierten Schaltkreises, ebenso wie die Übertragung von Daten zwischen diesem und einem externen Lese-/Schreibsystem mit Hilfe einer Trägerfrequenz mit einer viel höheren Frequenz als die der zu übertragenden Daten geschieht, wobei diese Trägerfrequenz mit Hilfe einer Sendespule zu einer Empfangsspule übertragen wird und das Signal am Ausgang dieser Empfangsspule vorherig gleichgerichtet und gefiltert wird, bevor es den Versorgungsanschlüssen des integrierten Schaltkreises zugeführt wird.

4. Datenübertragungs- und Datenmanagementsystem für einen integrierten Speicherschaltkreis mit Lese-/Schreibmitteln mit einem externen Lese-/Schreibmittelschaltkreis, **dadurch gekennzeichnet, dass** der integrierte Schaltkreis von den Lese-/Schreibmitteln trennbar ist, dass ein mobiles Element (65), das mit dem Lese-/Schreibmittelschaltkreis verbunden ist, dafür vorgesehen ist, um sich mit dem integrierten Speicherschaltkreis zu verbinden, dass der integrierte Schaltkreis einen internen Taktgeber (1) aufweist, um eine bestimmte Frequenz für die Übertragung der Daten vorzugeben, und dass der Lese-/Schreibschaltkreis einen Synchronisationsschaltkreis (68) aufweist, um die Ausgangssignale des integrierten Schaltkreises mit Eingangssignalen des integrierten Schaltkreises zu synchronisieren.

5. System nach Anspruch 4, **gekennzeichnet durch** einen Mikroprozessor (58) und einen Steuerschaltkreis (40, 41, 42, 43, 44), um Synchronisationsfehler zwischen den **durch** den integrierten Schaltkreis generierten Signalen und den **durch** den Mikroprozessor generierten Signalen zu ermitteln.

6. System nach Anspruch 4, **dadurch gekennzeichnet** durch einen auswechselbaren Speicher (59, 63, 64), der auf dem Lese-/Schreibschaltkreis festgelegt werden kann.

7. System nach Anspruch 4, **gekennzeichnet durch** ein mobiles Element (65), das zwei Kontaktelemente (71, 74) aufweist, von denen eines eine an einer Feder angeordnete zentrale Kontaktspitze aufweist.

8. System nach Anspruch 4, **gekennzeichnet durch** ein mobiles Element (65) mit einer Induktionsverbindung, ohne direkten Kontakt.

9. System nach Anspruch 4, **dadurch gekennzeichnet, dass** die Lese-/Schreibmittel zumindest Festspeicherelemente (ROM, EPROM) aufweisen, die die Basisdaten der Übertragung des Inhalts des integrierten Speicherschaltkreises enthalten, eine Tastatur (61), um die variablen Daten einzugeben, und eine Anzeige (62), um die notwendigen Informationen an den Anwender weiterzugeben.

10. System nach Anspruch 4, **dadurch gekennzeichnet, dass** zumindest ein Teil der Basisdaten für die Übertragung des Inhalts des integrierten Speicherschaltkreises in einem auswechselbaren Speicher (63, 64) enthalten ist, der auf dem Lese-/Schreibmittel angeordnet werden kann.

**Claims**

1. Method for serial data transmission between an integrated memory circuit and external reading/writing means supplying a supply current to the integrated circuit, data being transmitted from said reading/writing means to the integrated circuit by superimposing voltage pulses (30) to the supply voltage, data being transmitted from the integrated circuit to the reading/writing means by modulation of the current consumed by the integrated circuit **characterized in** the integrated circuit is designed to be separated from the reading/writing means, and that data transmission is enabled by connecting a mobile element (65) to the integrated circuit, that the integrated circuit is driven by an internal clock (1) synchronizing the generation of output signals (X,Y,Z) corresponding to data to be transmitted in the form of supply current modulations, that the reading/writing means and the supply current are synchronized by a synchronization circuit (68), that the reading/writing means form input signals (Ia) corresponding to data to be transmitted, and that said input signals (Ia) and the current modulations are synchronized.

2. Method according to claim 1, **characterized in that** the output signal (X,Y,Z) is a width-modulated, fixed frequency current signal, the width of the signals corresponding to a separate logic state (1,0,X) and to the data transmitted by the integrated circuit and **in that** the phase (φ) between the synchronized signals corresponds to a separate logic state (1,0,X) and constitutes the data transmitted to the integrated circuit.

3. Method according to claim 1, **characterized in that** the power supply of the integrated circuit, as well as the data transmission between the latter and an external reading/writing system takes place by means of a carrier frequency, whose frequency is much higher than that of the data to be transmitted, said carrier frequency being transmitted via a transmitting coil to a receiving coil, the signal at the output of the latter being previously rectified and filtered before being applied to the supply terminals of the integrated circuit.

4. System for the transmission and control of data for an integrated memory circuit, having reading/writing means with an external reading/writing circuit **characterized in that** the integrated circuit is designed to be separated from the reading/writing means, that a mobile element (65) connected to the reading/writing circuit can be connected to the integrated memory circuit, that the integrated circuit comprises an internal clock for supplying a fixed frequency for the data transmission, and that the reading/writing circuit comprises a synchronization circuit (68) for synchronizing the output signals of the integrated circuit with the input signals of the integrated circuit.

5. System according to claim 4, **characterized by** a microprocessor (58) and a control circuit (40,41,42,43,44) arranged so as to detect synchronism faults between the signals generated by the integrated circuit and the signals generated by the microprocessor.

6. System according to claim 4, **characterized by** an interchangeable memory (59,63,64), which can be fixed to the reading /writing circuit.

7. System according to claim 4, **characterized by** a mobile element (65) having to contact elements (71,74), including a central contact tip mounted on a spring.

8. System according to claim 4, **characterized by** a mobile element (65) designed to be connected by inductive coupling and without direct contact.

9. System according to claim 4, **characterized in that** the reading/writing means has at least fixed memory elements (ROM,EPROM), which have the basic data for transcribing the content of the integrated memory circuit, a keyboard (61) for introducing variable data and a display (62) for supplying the useful information to the user.

10. System according to claim 4, **characterized in that** at least part of the basic data for the transcription of the content of the integrated memory circuit is contained in an interchangeable memory (63,64) which can be fixed to the reading/writing means.

FIGURE 1

FIGURE 2

EP 0 650 267 B1

# FIGURE 3

# FIGURE 4

30 ⎍ PULS SUR L'ALIMENTATION

PULS DE SORTIE

Ia

NO PULS

TOO MUCH PULS

FIGURE 5

$Te = To*1000Ts/1000To = Ts$

EP 0 650 267 B1

FIGURE 6

FIGURE 7

FIGURE 8